# EUROPEAN PATENT SPECIFICATION

(11) **EP 4 487 011 B1**
(45) Date of publication and mention of the grant of the patent: **11.11.2026**
(21) Application number: 23710220.7
(22) Date of filing: 02.03.2023
(51) Int. Cl.: F04D 17/12, C01B 3/02, C01C 1/04, F04B 25/00, F04B 27/02, F04D 23/00, F04D 25/16, F25B 1/10

(54) **MULTI-COMPRESSION UNIT FOR AMMONIA PRODUCTION**
MULTIKOMPRESSIONSEINHEIT ZUR AMMONIAKHERSTELLUNG
UNITÉ DE COMPRESSION MULTIPLE POUR LA PRODUCTION D'AMMONIAC

(30) Priority: 04.03.2022 IT 202200004073
(43) Date of publication of application: 08.01.2025
(73) Proprietor: Nuovo Pignone S.r.l., 50100 Firenze (FI) (IT)
(72) Inventor: GHEZZI, Sergio, 50127 Florence (IT); BANCHI, Nicola, 50127 Florence (IT); CANGIOLI, Francesco, 50127 Florence (IT); WOLFLER, Tommaso, 50127 Florence (IT)
(74) Representative: Novagraaf Group
(86) International application number: PCT/EP2023/025099
(87) International publication number: WO 2023/165739

(56) References cited:
- EP-A1- 3 508 447
- CN-U- 209 195 623
- JP-A- 2000 154 020
- US-A- 1 936 167

## Description

### TECHNICAL FIELD

The present disclosure relates to ammonia synthesis systems and methods. Specifically, disclosed herein are novel compression unit arrangements for ammonia synthesis plants and systems.

### BACKGROUND ART

Ammonia is a gas with a high solubility in water, which is often used in an aqueous solution. Ammonia (NH₃) is used in several industrial applications, among others for the production of nitric acid, urea and other ammonia salts, such as nitrates, phosphates, and the like. Ammonia derivatives are widely used in agriculture. Around 80% of the ammonia production is used for the manufacturing of fertilizers.

Commonly, ammonia is produced by synthesis of nitrogen and hydrogen according to the following exothermic reaction (i.e. a reaction which releases heat):

N₂ + 3H₂ ↔ 2NH₃ + ΔH

wherein ΔH is heat released by the reaction.

Ammonia production usually starts from a feed gas, which provides a source of hydrogen, such as methane, for instance. Nitrogen is obtained from air. Details of the ammonia production process are known to those expert in the field, and some features of the plant and process will be recalled later on, for a better understanding of the new aspects of the systems disclosed herein and for a better appreciation of the various advantages and beneficial effects thereof vis-à-vis the plants of the current art.

Broadly speaking, the various process steps which are performed to produce ammonia from air and feed gas, require several compression trains. As understood herein, the term "compression train" indicates a machine aggregate comprising at least a driver and one or more compressors driven by the driver, to process one or more gaseous fluids. A gaseous fluid or gas as understood herein is any compressible fluid.

More specifically, in the ammonia production plants of the current art, a first compression train may be required to compress the feed gas, if the source gas is not available at a sufficient pressure, such as methane, and to deliver compressed feed gas to a primary steam reformer and to a secondary steam reformer. A second compression train is provided to compress process air and deliver compressed process air to the secondary reformer. Raw syngas (synthetic gas) obtained from shift conversion is compressed by a third compression train. A further, fourth compression train is required to process a refrigerant fluid, which chills the ammonia produced from the syngas in an ammonia converter. EP 3 508 447 A1 discloses an ammonia production plant in which two compression sections are combined together. JP 2000 154020 A discloses a compressor system for ammonia production.

Alternative methods for ammonia synthesis use hydrogen obtained by electrolysis. Recently, in an attempt to reduce production of greenhouse gases and avoid use of hydrocarbons, so-called green ammonia production processes and systems have been intensively investigated. Green ammonia production is where the process of making ammonia is 100% renewable and carbon-free. One way of making green ammonia is by using nitrogen separated from air and hydrogen produced by water electrolysis powered by renewable energy resources. Nitrogen and hydrogen are then fed as syngas into an ammonia converter to synthetize ammonia from the syngas. The ammonia thus obtained is chilled by heat exchange with a refrigerant fluid in a refrigerant circuit.

Green ammonia processes also require expensive and cumbersome compression units driven by respective drivers to compress, among others, the syngas and the refrigerant in the refrigeration circuit.

The necessity of several compression trains makes the ammonia production plant complex and expensive. It would therefore be desirable to simplify the general arrangement of an ammonia production plant.

### SUMMARY

The present invention is defined in the accompanying claims. According to one aspect, disclosed herein is an ammonia-production compression unit including a multi-stage compressor. The multi-stage compressor includes a first set of compressor stages adapted to compress a syngas containing hydrogen and nitrogen; and a second set of compressor stages adapted to compress a refrigerant of a refrigerant circuit. A syngas inlet is fluidly coupled to the most upstream compressor stage of the first set of compressor stages and a syngas outlet is fluidly coupled to the most downstream compressor stage of the first set of compressor stages. Similarly, a refrigerant inlet is fluidly coupled to the most upstream compressor stage of the second set of compressor stages and a refrigerant outlet is fluidly coupled to the most downstream compressor stage of the second set of compressor stages.

The terms "upstream" and "downstream" are referred to the direction of flow of the process gas in the relevant set of compressor stages.

The several stages of the first set of compressor stages and of the second set of compressor stages can be housed in a single casing of the multistage compressor.

The compressor is a reciprocating compressor. The reciprocating compressor includes a common crank shaft rotatingly housed in a single frame. The crank shaft imparts motion to a connecting rod, a cross-head, a piston rod and a piston for each of a plurality of cylinders of the multi-stage reciprocating compressor. A first set of cylinder/piston systems processes syngas and a second set of cylinder/piston systems processes the refrigerant. The two process gases are thus separated from one another even though they are processed by the same compressor. The reciprocating compressor provides a simple structure, with less issues concerning leakage and contamination between the two gases processed in the same compressor.

A compact arrangement is thus obtained, which is adapted to process two process fluids, namely the refrigerant and the syngas, in a single compressor.

According to a further aspect, disclosed herein is an ammonia production system including a syngas compression unit, an ammonia converter and an ammonia chiller, having a hot side fluidly coupled to the ammonia converter and a cold side fluidly coupled to an ammonia refrigeration circuit. The ammonia refrigeration circuit comprises a refrigerant compression unit adapted to circulate a refrigerant in the refrigeration circuit.

The syngas compression unit and the refrigerant compression unit are featured by a single multi-stage compressor, as outlined above.The syngas compression unit comprises a first set of compressor stages of a multi-stage compressor and the refrigerant compression unit comprises a second set of compressor stages of the multi-stage compressor.

According to yet a further aspect, disclosed herein is a method for producing ammonia, with an ammonia production system as outlined above. The method includes the following steps: compressing syngas in the first set of compressor stages of the multi-stage compressor; feeding the compressed syngas to the ammonia converter and producing ammonia therein; feeding ammonia from the ammonia converter through an ammonia chiller in heat exchange relationship with a refrigerant circulating in the refrigeration circuit; and removing heat from the refrigerant and compressing the cooled refrigerant in the second set of compressor stages of the multi-stage compressor.

Further features and embodiments of the compressor, system and method according to the present disclosure are described below and set forth in the attached claims.

### BRIEF DESCRIPTION OF THE DRAWINGS

Reference is now made briefly to the accompanying drawings, in which:
Fig.1 illustrates a green ammonia production system in one embodiment which is not according to the invention;
Fig.2 illustrates a green ammonia production system in a further embodiment which is not according to the invention;
Fig.3 illustrates a green ammonia production system in a first embodiment according to the invention;
Fig.4 illustrates a green ammonia production system in a further embodiment according to the invention; and
Fig.5 illustrates an ammonia production system not according to the invention; using a hydrocarbon feed gas.

### DETAILED DESCRIPTION

To reduce the complexity of an ammonia production system, the present disclosure suggests combining the syngas compression function and refrigerant compression function in a single multi-stage compressor. The stages of the multi-stage compressor are divided in a first set of compressor stages, adapted to compress the syngas, and a second set of compressor stages, adapted to compress the refrigerant that is used to chill the ammonia delivered by the ammonia converter.

In the following description and attached drawings, reference will be made specifically to green ammonia processes and systems. However, it shall be understood that the novel features of the present disclosure can be used with similar beneficial effects also in a more traditional ammonia production facility using feed gas, such as methane or any other hydrocarbon, as a source of hydrogen. The novel features disclosed herein are in fact intended to improve the ammonia synthesis section of the system, starting from the syngas compressor. How nitrogen and hydrogen are produced is not particularly relevant. Thus, in the present description and attached claims, the terms "hydrogen source" and "nitrogen source" can include any structure, system, unit, device or facility adapted to produce a hydrogen-containing fluid and a nitrogen-containing fluid, respectively. The term "syngas production section" as understood herein includes any structure, system, unit, device or facility adapted to produce a gaseous flow comprising, or consisting mainly of, hydrogen and nitrogen.

An "ammonia synthesis section" as understood herein is any system, unit, device, facility or structure adapted to synthesize ammonia from the syngas.

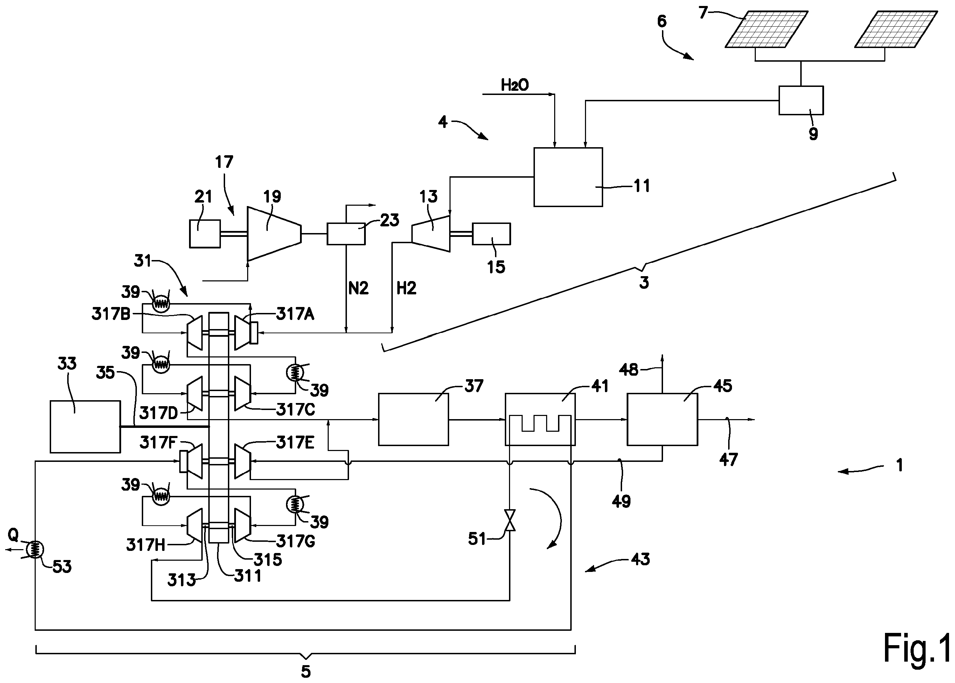

Turning now to the drawings, Fig.1 illustrates a schematic of a first ammonia production system 1.

The ammonia production system 1 includes a syngas production section 3 and an ammonia synthesis section 5. As mentioned above, by way of non-limiting example the ammonia production system 1 of Fig.1 is a green ammonia system, wherein hydrogen is produced by electrolysis, preferably using electric power from a renewable energy resource.

In the exemplary embodiment of Fig.1, the syngas production section 3 includes a hydrogen source 4. The hydrogen source 4 can use electric power for water electrolysis which is generated by an electric power source 6 including photovoltaic panels 7 and relevant inverters 9. Electric power from the electric power source 6 is fed to an electrolyzer 11, wherewith hydrogen (H₂) is produced from water (H₂O).

Alternative renewable energy resources can be used, such as wind energy through a wind farm, tide energy, or the like, as well as combinations thereof, to power the hydrogen source 4.

The hydrogen source 4 further includes a hydrogen compressor 13 driven by a first driver 15, for instance an electric motor or a turbine, such as a gas turbine or a steam turbine. The hydrogen compressor 13 delivers hydrogen at a pressure suitable for blending the hydrogen with nitrogen from a nitrogen source 17.

The nitrogen source 17 can include an air compressor 19 driven by a second driver 21, such as an electric motor or a turbine, e.g., a gas turbine or a steam turbine. Using a single train driven by a single driver and including the air compressor and the hydrogen compressor is not ruled out.

Compressed air is delivered by the air compressor 19 to a nitrogen separation unit 23, wherefrom compressed nitrogen (N₂) is delivered to the ammonia synthesis section 5. The nitrogen separation unit 23 may include a membrane separator, a frac-tioning system, for instance, or any other device, unit or system, adapted to separate nitrogen from the other air components, specifically oxygen and carbon dioxide.

The ammonia synthesis section 5 includes a multi-stage compressor 31, which can be driven by a third driver 33, e.g., an electric motor or a turbine, such as a gas turbine or a steam turbine. The possibility of using the same driver of the air compressor or of the hydrogen compressor is not ruled out

In the embodiment of Fig.1, the multi-stage compressor 31 is an integrally geared compressor including a bull gear 311 drivingly coupled to the third driver 33 via a shaft 35. A plurality of pinion gears 313 mesh with the bull gear 311. Each pinion gear 313 transmits rotation from the bull gear 311 to a respective shaft 315. In the embodiment of Fig.1, by way of non-limiting example, the multi-stage compressor 31 includes four shafts 315. In other embodiments, the number of shafts 315 can be larger or smaller than four.

Each shaft 315 drives into rotation at least one and preferably two compressor stages 317. In the exemplary embodiment of Fig.1 each shaft 315 drives into rotation two compressor stages 317. The eight compressor stages are labeled from 317A, 317B, 317C, 317D, 317E, 317F, 317G and 317H.

In the embodiment of Fig. 1 each compressor stage 317A-317H comprises a rotary impeller overhanging at an end, and more specifically at each end, of the respective shaft 315.

An integrally geared compressor can be particularly beneficial in a system as disclosed herein, since the combination of a bull gear and pinion gears allows to rotate different compressor impellers at different rotational speeds.

The compressor stages 317A-317H are grouped into a first set of compressor stages including compressor stages 317A, 317B, 317C, 317D and 317E, and a second set of compressor stages including compressor stages 317F, 317G and 317H. As will be explained in more detail below, the compressor stages of the first set feature a syngas compression unit and are adapted to process syngas. The compressor stages of the second set feature a refrigerant compressor and are adapted to compress a refrigerant. The number of compressor stages of each set can be different than the one shown in Fig.1. In preferred embodiments, however, the number of compressor stages of the first set is larger than the number of compressor stages of the second set. This takes into consideration the circumstance that syngas has a low molecular weight, as it includes a large amount of hydrogen. The low molecular weight of the process gas processed by the syngas compression section requires a comparatively larger number of compressor stages, to achieve the require compression ratio without too high rotational speeds being requested.

The compressor stages 317A, 317B, 317C and 317D of the first set of compressor stages are arranged in sequence, the compressor stage 317A being the most upstream and the 317D the most downstream compressor stage of the first set. The suction side of the first compressor stage 317A is fluidly coupled to the delivery side of the hydrogen compressor 13 and to the nitrogen separation unit 23, to receive a syngas flow containing hydrogen delivered by the hydrogen compressor 13 and nitrogen delivered by the separation unit 23. The syngas flow is then sequentially compressed at increasingly higher pressure values in the compressor stages 317A, 317B, 317C, 317D. The delivery side of the compressor stage 317D is fluidly coupled to an ammonia converter 37.

In the embodiment of Fig.1, the multi-stage compressor 31 is an inter-cooled or inter-refrigerated compressor, including one or more intercoolers 39 between one or more pairs of sequentially arranged compressor stages 317A-317H. In the embodiment of Fig.1 the multi-stage compressor 31 includes an intercooler 39 between each pair of sequentially arranged and fluidly coupled compressor stages.

The compressed syngas delivered by the compressor stage 317D is processed in the ammonia converter 37 where the synthesis reaction

N₂ + 3H₂ ↔ 2NH₃ + ΔH

takes place under suitable pressure and temperature conditions, and generates an ammonia-rich flow that is delivered to a chiller 41.

In the chiller 41 the ammonia-rich stream flows in a hot side of the chiller 41, in heat exchange relationship with a refrigerant fluid circulating in a refrigeration circuit 43. The refrigerant circulating in the refrigeration circuit can be ammonia or other suitable refrigerants.

The refrigerant fluid removes heat from the ammonia-rich stream and the chilled ammonia-rich stream is then delivered to an ammonia separator 45, where liquid ammonia separates (line 47) from unreacted syngas. This latter is recirculated in a syngas recovery and recirculation line 49. A third line 48 can be provided, to discharge other gaseous residues, if any.

The syngas recovery and recirculation line 49 delivers recycled, unreacted syngas to the multi-stage compressor 31. Specifically, in the embodiment of Fig.1, one of the compressor stages of the first set of compressor stages, namely compressor stage 317E, is dedicated to compression of the recirculated syngas. Re-compressed syngas delivered by the compressor stage 317E is returned to the ammonia converter 37 along with the main syngas flow delivered by the compressor stage 317G.

As illustrated in the schematic of Fig. 1, the refrigeration circuit 43 comprises: a refrigerant compression unit, which compresses and circulates the refrigerant in the refrigeration circuit 43; an expander, a throttling valve, or a lamination valve 51; the cold side of the ammonia chiller 41; and a heat exchanger 53, where heat Q is removed from the refrigerant circulating in the refrigeration circuit 43 before compression in the refrigerant compression unit.

As shown in the schematic of Fig.1 and as mentioned above, the refrigerant compression unit is featured by the second set of compressor stages 317F, 317G and 317H. More specifically, expanded and heated refrigerant discharged from the hot side of the ammonia chiller 41 is delivered to the suction side of the compressor stage 317F via heat exchanger 53, partly compressed therein and delivered sequentially through the compressor stage 317G and finally through the compressor stage 317H. The delivery side of the compressor stage 317H is fluidly coupled to the expander or valve 51.

In summary, the refrigerant compression unit and the syngas compression unit are combined in the same multi-stage compressor 31, wherein part of the compressor stages (stages 317A, 317B, 317C, 317D, 317E) are dedicated to syngas compression and the remaining compression stages (stages 317F, 317G, 317H) are dedicated to refrigerant compression.

This layout results in a significant reduction in the CAPEX of the system 1 and of the footprint and structural complexity thereof.

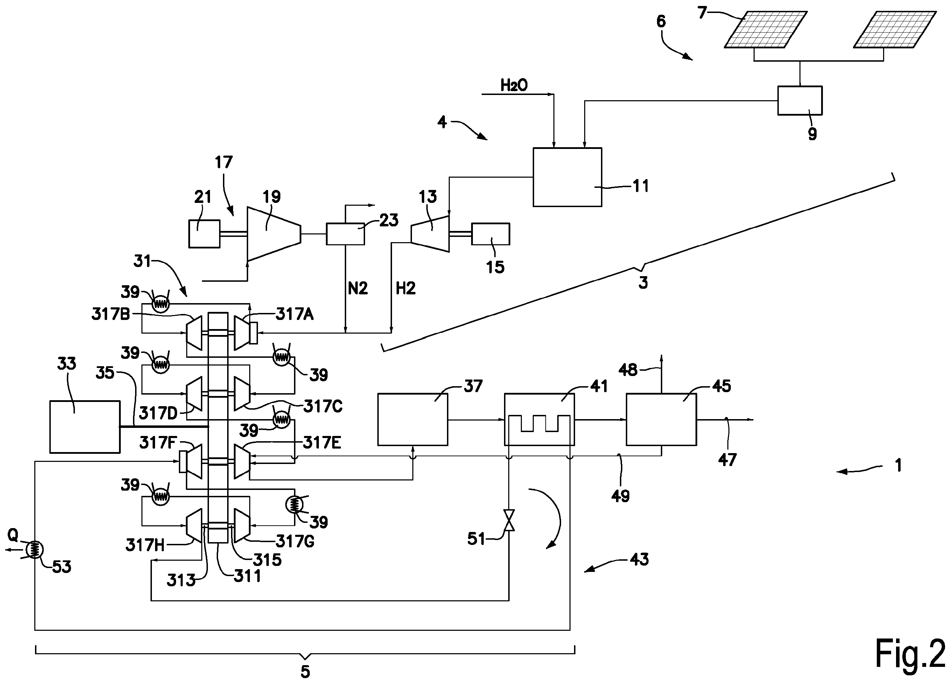

With continuing reference to Fig.1, Fig.2 illustrates a modified embodiment of the ammonia production system 1. The same reference numbers indicate the same or equivalent parts of the system 1 as shown and described above with reference to Fig.1. These parts will not be described again. The system of Fig.2 differs from the system of Fig.1 in that the main syngas flow entering the first compressor stage 317A is processed through all the compressor stages 317A, 317B, 317C, 317D and 317E of the first set of compressor stages in sequence. The recovered syngas from the ammonia separator 45 is merged with the main syngas flow from the compressor stage 317D and the main syngas stream and recovered syngas stream from the ammonia separator 45 are subjected to final compression in the most downstream compressor stage 317E of the first set of compressor stages 317A-317E.

With continuing reference to Figs.1 and 2, Fig.3 illustrates a first embodiment of the system according to the invention. The same reference numbers designate the same elements or components illustrated in Figs. 1 and 2 and described above, or elements and features having a similar or equivalent function in the system 1.

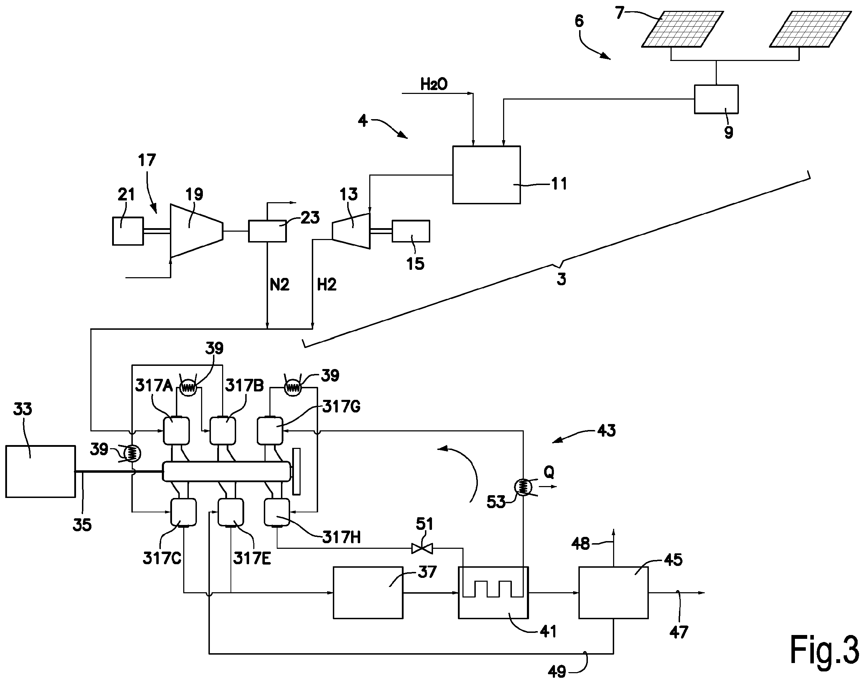

The main difference between the embodiment of Fig.3 and the embodiments of Figs. 1 and 2, is that the system 1 of Fig.3 includes a multi-stage reciprocating compressor, again labeled 31, instead of an integrally geared compressor as shown in Figs 1 and 2. Reference number 33 again indicates the driver of the multi-stage compressor 31. The driver 33 is drivingly coupled to a crank shaft 61 rotatingly housed in a frame 63. The crank shaft 61 transmits the rotation motion to a connecting rod, a cross-head, a piston rod and a piston for each of a plurality of cylinders of the multi-stage reciprocating compressor 31. The connecting rods, cross-heads, piston rods and pistons are not shown in the schematic of Fig.3.

The multi-stage reciprocating compressor 31 includes a first set of compressor stages 317A, 317B, 317C and 317E, and a second set of compressor stages 317G, 317H. Each compressor stage is featured by a respective compressor cylinder, housing a piston reciprocatingly sliding therein. The first set of compressor stages 317A, 317B, 317C, 317E processes syngas and the second set of compressor stages 317G, 317H processes refrigerant fluid circulating in the refrigerant circuit. In a way similar to the embodiment of Fig.1, the multi-stage compressor 31 of Fig.3 comprises a compressor stage 317E, which processes syngas recovered and recirculated from the ammonia separator 45, while the compressor stages 317A, 317B, 317C are arranged in sequence to process syngas consisting of nitrogen from the nitrogen source 17 and the hydrogen from the hydrogen source 4.

In the embodiment of Fig.3, an intercooler can be provided between each pair of sequentially arranged compressor stages, except between stages 317C and 317E, and between stages 317E and 317G, which are not in direct fluid connection with one another.

The system of Fig.3 operates in quite the same way as the system of Figs. 1 and 2.

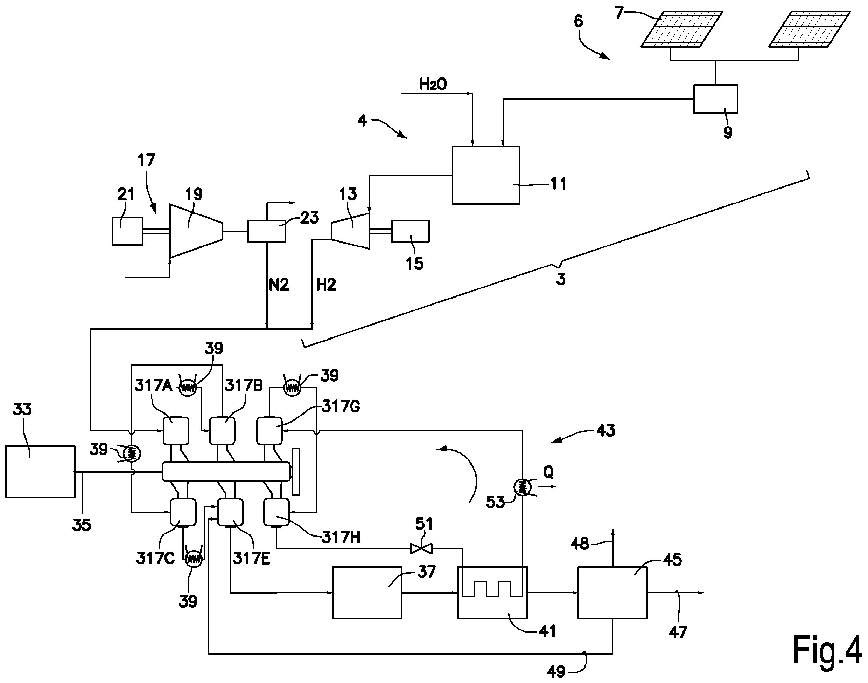

With continuing reference to Figs 1, 2 and 3, Fig.4 illustrates a further embodiment of the ammonia production system 1. The system of Fig.4 differs from the system of Fig.3 mainly in that the delivery side of the compressor stage 317C is fluidly coupled to the suction side of the most downstream compressor stage 317E of the first set of compressor stages, such that the compressor stage 317E processes syngas recirculated through the recovery and recirculation line 49 as well as syngas partly compressed by the first compressor stage 317A, the second compressor stage 317B and the third compressor stage 317C.

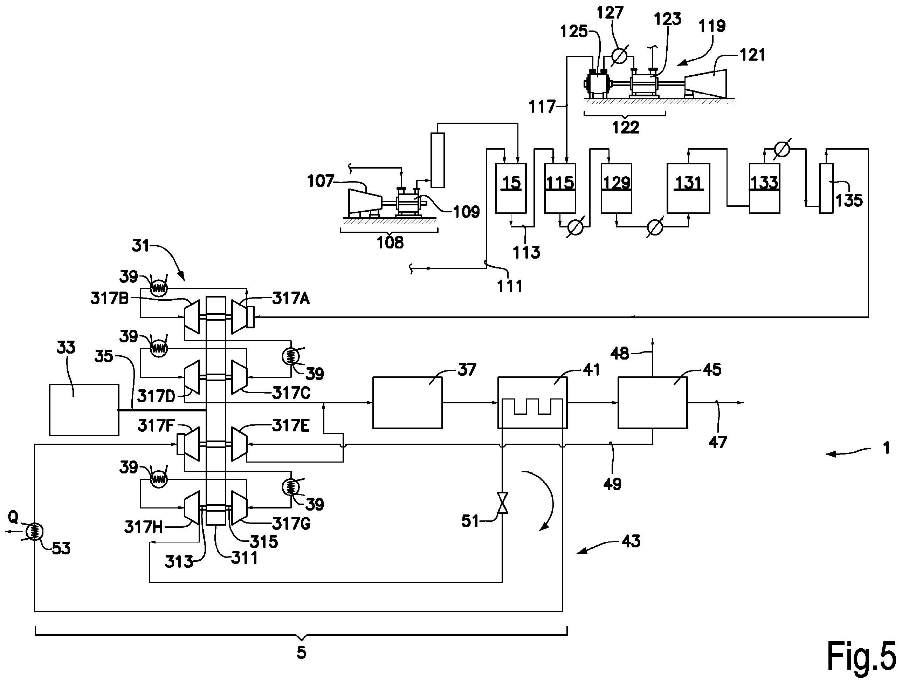

While Figs 1 to 4 schematically illustrate green ammonia systems, Fig.5 illustrates a schematic of an exemplary embodiment of a system, in which the multi-stage compressor for processing syngas and refrigerant gas in different compressor stages thereof is combined with a standard ammonia production section, which uses a hydrocarbon, such as methane (CH₄) or another feed gas, as a source of hydrogen for the production of syngas.

In Fig.5 feed gas, for instance methane (CH₄) or another gaseous hydrocarbon or gaseous hydrocarbon blend, is delivered through a feed gas compression train 103 to a primary catalytic steam reformer 105. The feed gas compression train 103 comprises a first driver 107 and a feed gas compression section 108. This latter can comprise a compressor 109. Process steam is delivered at 111 to the primary catalytic steam reformer 105, wherein feed gas reacts with steam to generate carbon monoxide and hydrogen according to the reactions

CH₄ + H₂O ↔ CO + 3H₂

CO + H₂O ↔ CO₂ + H₂

The primary reformer 105 is fluidly coupled to a secondary steam reformer 115, which receives the reaction products from the primary reformer 105 in addition to process air from process air inlet line 117. The process air is compressed by a process air compression train 119.

The process air compression train 119 comprises a second driver 121, which can drive a process air compression section 122. This latter can include for instance a first process air compressor 123 and a second process air compressor 125 arranged in series. An intercooler 127 can be arranged between the delivery of the first process air compressor 123 and the second process air compressor 125.

In the secondary steam reformer 115 the unreacted CH₄ from the primary catalytic steam reformer 105 is transformed into carbon monoxide (CO) and carbon dioxide (CO₂) by combustion. The resulting gas mixture is raw syngas, which is delivered to a shift conversion unit 129.

In the shift conversion unit 129 the carbon monoxide is converted into carbon dioxide according to the following reaction

CO + H₂O ↔ CO₂ + H₂

The resulting gas mixture is delivered to a scrubber 131, where carbon dioxide is stripped and the resulting gas mixture is delivered to a methanation section 133. The residual carbon monoxide contained in the gas flow from the scrubber 131 is converted by hydrogenation in the methanation section 133, generating CH₄ and H₂O according to the reactions

CO + 3H₂ ↔ CH₄ + H₂O

O₂ + 4H₂ ↔ CH₄ + 2H₂O

The gas mixture thus obtained is fed through a drier 135 and the resulting pure syngas, containing mainly nitrogen and hydrogen, is delivered to the multi-stage compressor 31, which can be configured as described above and shown in any of Figs 1, 2, 3 or 4.

In Fig. 5 the multi-stage compressor 31, as well as the remaining parts of the system 1, namely the ammonia converter 37, the ammonia separator 45, the chiller 4 and the refrigerant circuit 43, are configured as in Fig.1. In other embodiments, the multi-stage compressor 31 and other parts of the system downstream thereof can be configured as shown in any one of the above-described Figs 2, 3 and 4.

By combining syngas compression and refrigerant compression in a single multistage compressor, the number of compressor casings and compressor units of the ammonia production system can be reduced. By proper selection of the number of compressor stages in each of the first set and second set of compressor stages and by providing a suitable compression ratio, a particularly compact arrangement can be obtained, with a beneficial effect in terms of footprint reduction, for instance. In preferred embodiments, the first set of compressor stages, which compress the syngas, may comprise between 3 and 5 compressor stages. In embodiments, the second set of compressor stages may comprise between 2 and 4 compressor stages.

In currently preferred embodiments, the first set of compressor stages may be adapted to provide a compression ratio between 4 and 7; and the second set of compressor stages may be adapted to provide a compression ratio between 12 and 17.

Exemplary embodiments have been disclosed above and illustrated in the accompanying drawings. It will be understood by those skilled in the art that various changes, omissions and additions may be made to that which is specifically disclosed herein without departing from the scope of the invention as defined in the following claims.

## Claims

1. An ammonia-production compression unit comprising a multi-stage compressor (31); wherein the multi-stage compressor comprises:
a first set of compressor stages (317A,317B,317C,317E) adapted to compress a syngas containing hydrogen and nitrogen; and
a second set of compressor stages (317G,317H) adapted to compress a refrigerant of a refrigerant circuit;
**characterized in that** the multi-stage compressor is a reciprocating compressor (31) including a plurality of cylinders, wherein a first set of cylinders compresses syngas and a second set of cylinders compresses the refrigerant; and wherein a single crankshaft (35) drives the pistons of the first set of cylinders and the pistons of the second set of cylinders.

2. The compression unit of claim 1, wherein the first set of compressor stages comprises between 3 and 5 compressor stages; the second set of compressor stages comprises between 2 and 4 compressor stages; the first set of compressor stages is adapted to provide a compression ratio between 4 and 7; and the second set of compressor stages is adapted to provide a compression ratio between 12 and 17.

3. The compression unit of any one of the preceding claims, wherein the multi-stage compressor comprises at least one of: an intercooler (39) between two sequentially arranged stages of the first set of compressor stages; an intercooler (39) between two sequentially arranged stages of the second set of compressor stages.

4. An ammonia production system, including:
a syngas compression unit;
an ammonia converter (37);
an ammonia chiller (41), having a hot side fluidly coupled to the ammonia converter (37) and a cold side fluidly coupled to an ammonia refrigeration circuit (43);
wherein the ammonia refrigeration circuit comprises a refrigerant compression unit adapted to circulate a refrigerant in the refrigeration circuit;
wherein the syngas compression unit and the refrigerant compression unit comprise the compression unit of any one of the preceding claims.

5. The ammonia production system of claim 4, wherein the refrigerant is ammonia.

6. The ammonia production system of claim 4 or 5, further comprising an ammonia separator (45) downstream of the ammonia chiller (41); wherein a syngas recirculation line (49) fluidly connects the ammonia separator (45) to the most downstream stage (317E) of the first set of stages.

7. The ammonia production system of claim 6, wherein the most downstream stage of the first set of stages is adapted to process only syngas recirculated from the ammonia separator.

8. The ammonia production system of claim 6, wherein the most downstream stage (317E) of the first set of stages is further fluidly coupled to a delivery side of an upstream stage of said first set of stages.

9. A method for producing ammonia, with an ammonia production system of any one of claims 4 to 8, the method comprising the following steps:
compressing syngas in the first set of compressor stages (317A,317B,317C, 317E) of the multi-stage compressor (31);
feeding the compressed syngas to the ammonia converter (37) and producing ammonia therein;
feeding ammonia from the ammonia converter (37) through an ammonia chiller (41) in heat exchange relationship with a refrigerant circulating in the refrigeration circuit; and
removing heat from the refrigerant and compressing the cooled refrigerant in the second set of compressor stages (317G,317H) of the multi-stage compressor (31).

10. The method of claim 9, further comprising the following steps.
processing chilled ammonia in the ammonia separator (45);
recovering syngas from the ammonia separator (45) and recirculating the recovered syngas through one of the compressor stages of the first set of compressor stages (317A,317B,317C,317E) of the multistage compressor (31).

## Patentansprüche

1. Ammoniakproduktionsverdichtereinheit, umfassend einen mehrstufigen Verdichter (31); wobei der mehrstufige Verdichter umfasst:
einen ersten Satz von Verdichterstufen (317A,317B,317C,317E), der angepasst ist, um ein Wasserstoff und Stickstoff enthaltendes Synthesegas zu verdichten; und
einen zweiten Satz von Verdichterstufen (317G,317H), der angepasst ist, um ein Kältemittel eines Kältemittelkreislaufs zu verdichten;
**dadurch gekennzeichnet, dass** der mehrstufige Verdichter ein Kolbenverdichter (31) ist, der eine Vielzahl von Zylindern einschließt, wobei ein erster Satz von Zylindern Synthesegas verdichtet und ein zweiter Satz von Zylindern das Kältemittel verdichtet; und wobei eine einzige Kurbelwelle (35) die Kolben des ersten Satzes von Zylindern und die Kolben des zweiten Satzes von Zylindern antreibt.

2. Verdichtereinheit nach Anspruch 1, wobei der erste Satz von Verdichterstufen zwischen 3 und 5 Verdichterstufen umfasst; der zweite Satz von Verdichterstufen zwischen 2 und 4 Verdichterstufen umfasst; der erste Satz von Verdichterstufen angepasst ist, um ein Verdichtungsverhältnis zwischen 4 und 7 bereitzustellen; und der zweite Satz von Verdichterstufen angepasst ist, um ein Verdichtungsverhältnis zwischen 12 und 17 bereitzustellen.

3. Verdichtereinheit nach einem der vorstehenden Ansprüche, wobei der mehrstufige Verdichter mindestens eines umfasst von: einem Zwischenkühler (39) zwischen zwei aufeinanderfolgend angeordneten Stufen des ersten Satzes von Verdichterstufen; einen Zwischenkühler (39) zwischen zwei aufeinanderfolgend angeordneten Stufen des zweiten Satzes von Verdichterstufen.

4. Ammoniakproduktionssystem, das einschließt:
eine Synthesegasverdichtungseinheit;
einen Ammoniakkonverter (37);
ein Ammoniakkühler (41), der eine heiße Seite, die an den Ammoniakkonverter (37) fluidisch gekoppelt ist, und eine kalte Seite aufweist, die fluidisch an einen Ammoniakkältekreislauf (43) gekoppelt ist;
wobei der Ammoniakkältekreislauf eine Kältemittelverdichtereinheit umfasst, die angepasst ist, um ein Kältemittel in dem Kältekreislauf zirkulieren zu lassen;
wobei die Synthesegasverdichtereinheit und die Kältemittelverdichtereinheit die Verdichtereinheit nach einem der vorstehenden Ansprüche umfassen.

5. Ammoniakproduktionssystem nach Anspruch 4, wobei das Kältemittel Ammoniak ist.

6. Ammoniakproduktionssystem nach Anspruch 4 oder 5, ferner umfassend einen Ammoniakseparator (45) stromabwärts des Ammoniakkühlers (41); wobei eine Synthesegasrezirkulationsleitung (49) den Ammoniakseparator (45) mit der am weitesten stromabwärts gelegenen Stufe (317E) des ersten Satzes von Stufen fluidisch verbindet.

7. Ammoniakproduktionssystem nach Anspruch 6, wobei die am weitesten stromabwärts gelegene Stufe des ersten Satzes von Stufen angepasst ist, um nur Synthesegas zu verarbeiten, das aus dem Ammoniakseparator rezirkuliert wird.

8. Ammoniakproduktionssystem nach Anspruch 6, wobei die am weitesten stromabwärts gelegene Stufe (317E) des ersten Satzes von Stufen ferner an eine Abgabeseite einer stromaufwärts gelegenen Stufe des ersten Satzes von Stufen fluidisch gekoppelt ist.

9. Verfahren zum Produzieren von Ammoniak mit einem Ammoniakproduktionssystem nach einem der Ansprüche 4 bis 8, wobei das Verfahren die folgenden Schritte umfasst:
Verdichten von Synthesegas in dem ersten Satz von Verdichterstufen (317A,317B,317C,317E) des mehrstufigen Verdichters (31);
Zuführen des verdichteten Synthesegases zu dem Ammoniakkonverter (37) und Produzieren von Ammoniak darin;
Zuführen von Ammoniak aus dem Ammoniakkonverter (37) durch einen Ammoniakkühler (41) in Wärmeaustauschbeziehung mit einem Kältemittel, das in dem Kältekreislauf zirkuliert; und
Abführen von Wärme aus dem Kältemittel und Verdichten des gekühlten Kältemittels in dem zweiten Satz von Verdichterstufen (317G,317H) des mehrstufigen Verdichters (31).

10. Verfahren nach Anspruch 9, ferner umfassend die folgenden Schritte.
Verarbeiten von gekühltem Ammoniak in dem Ammoniakseparator (45);
Rückgewinnen von Synthesegas aus dem Ammoniakseparator (45) und Rezirkulieren des rückgewonnenen Synthesegases durch eine der Verdichterstufen des ersten Satzes von Verdichterstufen (317A,317B,317C,317E) des mehrstufigen Verdichters (31).

## Revendications

1. Unité de compression de production d'ammoniac comprenant un compresseur multiétagé (31) ; dans laquelle le compresseur multiétagé comprend :
un premier ensemble d'étages de compresseur (317A, 317B, 317C, 317E) conçu pour comprimer un gaz de synthèse contenant de l'hydrogène et de l'azote ; et
un second ensemble d'étages de compresseur (317G, 317H) conçu pour comprimer un réfrigérant d'un circuit de réfrigérant ;
**caractérisée en ce que** le compresseur multiétagé est un compresseur alternatif (31) comportant une pluralité de cylindres, dans laquelle un premier ensemble de cylindres comprime le gaz de synthèse et un second ensemble de cylindres comprime le réfrigérant ; et dans laquelle un unique vilebrequin (35) entraîne les pistons du premier ensemble de cylindres et les pistons du second ensemble de cylindres.

2. Unité de compression selon la revendication 1, dans laquelle le premier ensemble d'étages de compresseur comprend entre 3 et 5 étages de compresseur ; le second ensemble d'étages de compresseur comprend entre 2 et 4 étages de compresseur ; le premier ensemble d'étages de compresseur est conçu pour fournir un taux de compression entre 4 et 7 ; et le second ensemble d'étages de compresseur est conçu pour fournir un taux de compression entre 12 et 17.

3. Unité de compression selon l'une quelconque des revendications précédentes, dans laquelle le compresseur multiétagé comprend au moins l'un parmi : un refroidisseur intermédiaire (39) entre deux étages agencés séquentiellement du premier ensemble d'étages de compresseur ; un refroidisseur intermédiaire (39) entre deux étages agencés séquentiellement du second ensemble d'étages de compresseur.

4. Système de production d'ammoniac, comportant :
une unité de compression de gaz de synthèse ;
un convertisseur d'ammoniac (37) ;
un refroidisseur d'ammoniac (41), ayant un côté chaud couplé fluidiquement au convertisseur d'ammoniac (37) et un côté froid couplé fluidiquement à un circuit de réfrigération d'ammoniac (43) ;
dans lequel le circuit de réfrigération d'ammoniac comprend une unité de compression de réfrigérant conçue pour faire circuler un réfrigérant dans le circuit de réfrigération ;
dans lequel l'unité de compression de gaz de synthèse et l'unité de compression de réfrigérant comprennent l'unité de compression selon l'une quelconque des revendications précédentes.

5. Système de production d'ammoniac selon la revendication 4, dans lequel le réfrigérant est de l'ammoniac.

6. Système de production d'ammoniac selon la revendication 4 ou 5, comprenant en outre un séparateur d'ammoniac (45) en aval du refroidisseur d'ammoniac (41) ; dans lequel une conduite de recirculation de gaz de synthèse (49) raccorde fluidiquement le séparateur d'ammoniac (45) à l'étage le plus en aval (317E) du premier ensemble d'étages.

7. Système de production d'ammoniac selon la revendication 6, dans lequel l'étage le plus en aval du premier ensemble d'étages est conçu pour traiter uniquement le gaz de synthèse remis en circulation à partir du séparateur d'ammoniac.

8. Système de production d'ammoniac selon la revendication 6, dans lequel l'étage le plus en aval (317E) du premier ensemble d'étages est en outre couplé fluidiquement à un côté de distribution d'un étage amont dudit premier ensemble d'étages.

9. Procédé permettant de produire de l'ammoniac, avec un système de production d'ammoniac selon l'une quelconque des revendications 4 à 8, le procédé comprenant les étapes suivantes :
compression de gaz de synthèse dans le premier ensemble d'étages de compresseur (317A, 317B, 317C, 317E) du compresseur multiétagé (31) ;
alimentation du gaz de synthèse comprimé au convertisseur d'ammoniac (37) et production d'ammoniac dans celui-ci ;
alimentation d'ammoniac à partir du convertisseur d'ammoniac (37) à travers un refroidisseur d'ammoniac (41) en relation d'échange thermique avec un réfrigérant circulant dans le circuit de réfrigération ; et
élimination de la chaleur provenant du réfrigérant et compression du réfrigérant refroidi dans le second ensemble d'étages de compresseur (317G, 317H) du compresseur multiétagé (31).

10. Procédé selon la revendication 9, comprenant en outre les étapes suivantes :
traitement de l'ammoniac réfrigéré dans le séparateur d'ammoniac (45) ;
récupération de gaz de synthèse en provenance du séparateur d'ammoniac (45) et remise en circulation du gaz de synthèse récupéré à travers l'un des étages de compresseur du premier ensemble d'étages de compresseur (317A, 317B, 317C, 317E) du compresseur multiétagé (31).
